(19) Europäisches Patentamt
European Patent Office
Office européen des brevets

(11) Veröffentlichungsnummer: **0 016 401**
**B1**

# (12) EUROPÄISCHE PATENTSCHRIFT

(45) Veröffentlichungstag der Patentschrift: **15.09.82**

(51) Int. Cl.³: **C 07 F 9/14**

(21) Anmeldenummer: **80101250.1**

(22) Anmeldetag: **12.03.80**

(54) **Verfahren zur Herstellung von Alkylesterphosphorsäuredichloriden.**

(30) Priorität: **24.03.79 DE 2911700**

(43) Veröffentlichungstag der Anmeldung: **01.10.80 Patentblatt 80/20**

(45) Bekanntmachung des Hinweises auf die Patenterteilung: **15.09.82 Patentblatt 82/37**

(84) Benannte Vertragsstaaten: **BE CH DE FR GB IT NL**

(56) Entgegenhaltungen:
**US-A-2 750 399**
**US-A-2 960 527**
**HOUBEN-WEYL: »Methoden der organischen Chemie«, 4. Auflage, Band 12, Teil 2, »Organische Phosphorverbindungen«, 1964, Georg Thieme Stuttgart, DE**

(73) Patentinhaber: **BAYER AG, Zentralbereich Patente, Marken und Lizenzen, D-5090 Leverkusen 1, Bayerwerk (DE)**

(72) Erfinder: **Schmidt, Karl-Julius, Dr., Sillerstrasse 44, D-5600 Wuppertal 11 (DE)**
Erfinder: **Schmidt, Friedrich, Dr., In den Birken 77, D-5060 Wuppertal 1 (DE)**
Erfinder: **Siegle, Peter, Dr., Am Reinholdsberg 1, D-5000 Köln 80 (DE)**
Erfinder: **Hansen, Gert, Dr., c/o Bayer do Brasil S.A. Caixa Postal 959, 01 000 Sao Paulo (BR)**

**EP 0 016 401 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Herstellung von Alkylesterphosphorsäuredichloriden

Die Erfindung betrifft ein kontinuierliches Verfahren zur Herstellung von Alkylesterphosphorsäuredichloriden.

Es ist bekannt, daß man Alkylesterphosphorsäuredichloride erhält, wenn man Phosphoroxychlorid in Gegenwart eines Lösungsmittels, wie beispielsweise Tetrachlorkohlenstoff oder Petrolether, mit dem entsprechenden Alkohol reagieren läßt (Compt. rend. 246, 1879 [1958], J. Am. Chem. Soc. 51, 953 [1929]). Die Ausbeuten sind mit 60–70% jedoch niedrig, sie gehen noch weiter zurück, wenn die Reaktionstemperaturen erhöht werden.

Nach Houben-Weyl XII, 2, S. 212, sind für eine gute Ausbeute wichtig: niedrige Reaktionstemperaturen (um ±0°C), ein Phosphoroxichlorid-Überschuß und die möglichst schnelle Entfernung des gebildeten Chlorwasserstoffes. Nur unter diesen Voraussetzungen kann die Bildung von Dialkylesterphosphorsäurechloriden, Trialkylphosphorsäureestern sowie Alkylchloriden zurückgedrängt werden.

Nach dem US-Patent 2 487 859 wird Kohlendioxid durch das Reaktionsgemisch geblasen, um gebildeten Chlorwasserstoff schnell zu entfernen.

In Chemický prümysl, 11, 461 (1961), werden neben diskontinuierlichen auch halbkontinuierliche Umsetzungen nach der Reaktionsgleichung

$$POCl_3 + CH_3OH \rightarrow CH_3O-P(O)Cl_2 + HCl$$

beschrieben. Die Reaktionskomponenten werden zunächst auf Temperaturen, die 10–15°C über dem Siedepunkt des Alkohols liegen, aufgeheizt und anschließend in einem Jet gemischt. Trotz relativ guter Ausbeuten ist dieses Verfahren wegen des hohen Energieaufwandes zur Durchführung im technischen Maßstab ungeeignet.

Es wurde nun ein kontinuierliches Verfahren zur Herstellung von Alkylesterphosphorsäuredichloriden gefunden, bei dem man einen Überschuß Phosphoroxichlorid mit dem entsprechenden Alkohol, eventuell unter Zusatz eines Verdünnungsmittels, umsetzt.

Die Erfindung betrifft demnach ein Verfahren zur Herstellung von Alkylesterphosphorsäuredichloriden durch Umsetzung von Phosphoroxichlorid mit aliphatischen Alkoholen nach der Reaktionsgleichung

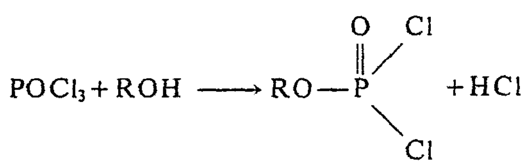

in der R für $C_1-C_5$-Alkyl steht, das dadurch gekennzeichnet ist, daß man die Umsetzung bei Temperaturen von 10 bis 50°C unter Verwendung eines 5- bis 400%igen Phosphoroxichlorid-Überschusses kontinuierlich durchführt.

Nach dem erfindungsgemäßen Verfahren wird ein Überschuß von 5 bis 400% an Phosphoroxichlorid eingesetzt, um die Bildung von Nebenprodukten weitgehend zu unterdrücken. Bevorzugt wird allerdings ein Überschuß zwischen 10 und 50% verwendet.

Das erfindungsgemäße Verfahren wird im Temperaturbereich von +10°C bis +50°C, vorzugsweise von +20°C bis +40°C, durchgeführt.

Das erfindungsgemäße Verfahren kann bei Unter- oder Normaldruck, vorzugsweise bei Normaldruck, durchgeführt werden.

Das erfindungsgemäße Verfahren wird kontinuierlich in einer Reaktionsapparatur durchgeführt, in der die Verweilzeit des gebildeten Chlorwasserstoffes in dem Reaktionsgemisch nur kurz ist.

Als gegebenenfalls zu verwendende Verdünnungsmittel werden Lösungsmittel mit annähernd gleichem Siedepunkt wie Phosphoroxichlorid verwendet, vorzugsweise jedoch Toluol.

Eine kontinuierliche Ausführungsform des erfindungsgemäßen Verfahrens sei mit Hilfe von Abb. 1 erläutert:

In der Mischkammer (1) werden Phosphoroxichlorid (A), Alkohol (B) und eventuell ein Verdünnungsmittel (A') kontinuierlich gemischt. Das Reaktionsgemisch wird im Kühler (2) abgekühlt und anschließend wird der gebildete Chlorwasserstoff in einer Vorentgasung (3) abgetrennt und bei (C) zur HCl-Absorption weitergeleitet. Bei (C) besteht gleichzeitig eine Verbindung zur Vakuumpumpe. Das weitgehend HCl-freie Reaktionsgemisch wird in einer Destillationskolonne (4) aufgearbeitet, dabei gehen Phosphoroxichlorid und das verwendete Verdünnungsmittel über Kopf und werden im Kondensator (5) kondensiert. Das Kondensat wird wieder in die Reaktion zurückgeführt. Das Sumpfprodukt (D) aus der Destillationskolonne (4) besteht zu ca. 95% aus dem entsprechenden Alkylesterdichlorid. Die Ausbeuten liegen zwischen 90 und 95%.

Es ist überraschend, daß bei dem erfindungsgemäßen Verfahren die Alkylesterphosphorsäuredichloride in so hoher Reinheit und Ausbeute gebildet werden, da man nach dem Stand der Technik erwarten müßte, daß bei den verwendeten höheren Reaktionstemperaturen die Ausbeute drastisch zurückgeht.

Das erfindungsgemäße Verfahren stellt somit eine Bereicherung der Technik dar.

Beispiele

Ethylesterphosphorsäuredichlorid

In der Mischkammer (1) werden 148 kg/h Phosphoroxichlorid, 148 kg/h Toluol und 40 kg/h Ethanol gemischt. Das Reaktionsgemisch wird mittels Kühler (2) auf +20° C gehalten. In der Vorentgasung (3) wird der gebildete Chlorwasserstoff im Vakuum entfernt (T=60° C, P=100 mbar). In Kolonne (3) werden ebenfalls unter Vakuum 15 kg/h Phosphoroxichlorid und 148 kg/h Toluol über Kopf abdestilliert und wieder in die Reaktion zurückgeführt. Am Sumpf der Kolonne laufen 141 kg/h Produkt folgender Zusammensetzung ab:

| | |
|---|---|
| Ethylesterphosphorsäuredichlorid | 95% |
| Diethylesterphosphorsäurechlorid | 3% |
| Unbekannte | 2% |

Methylesterphosphorsäuredichlorid

In gleicher Weise läßt sich bei ca. 30% Phosphoroxichlorid-Überschuß auch Methylesterphosphorsäuredichlorid herstellen. Die Ausbeuten liegen hierbei um 90%.

**Patentansprüche**

1. Verfahren zur Herstellung von Alkylesterphosphorsäuredichloriden durch Umsetzung von Phosphoroxichlorid mit primären aliphatischen Alkoholen nach der Reaktionsgleichung

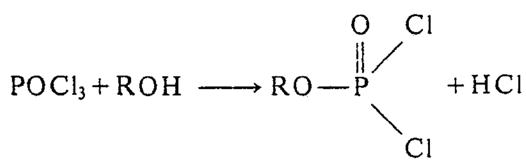

in der R für $C_1-C_5$-Alkyl steht, dadurch gekennzeichnet, daß man das Phosphoroxichlorid in einem Überschuß von 5 bis 400% durch kontinuierliches Mischen mit dem Alkohol, gegebenenfalls unter Verwendung eines Verdünnungsmittels, bei Temperaturen zwischen 10 und 50° C zur Reaktion bringt, das Reaktionsgemisch abkühlt, anschließend den gebildeten Chlorwasserstoff in einer Vorentgasung abtrennt, das weitgehend vom Chlorwasserstoff befreite Reaktionsgemisch in einer Destillationskolonne unter Über-Kopf-Abtrennung und Kondensation des nicht umgesetzten Phosphoroxichlorids und des gegebenenfalls verwendeten Verdünnungsmittels aufarbeitet, das Kondensat wieder in die Reaktion zurückführt und als Sumpfprodukt das entsprechende Alkylesterdichlorid kontinuierlich entnimmt.

2. Verfahren nach Anspruch 1, dadurch gekennzeichnet, daß man einen 10- bis 50%igen Phosphoroxichlorid-Überschuß verwendet.

3. Verfahren gemäß den Ansprüchen 1 und 2, wobei R für Methyl oder Äthyl steht.

**Claims**

1. Process for the preparation of phosphoric acid alkyl ester dichlorides by reacting phosphorus oxychloride with primary aliphatic alcohols according to the reaction equation

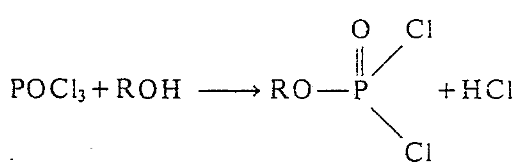

in which R represents $C_1-C_5$-alkyl, characterised in that an excess of the phosphorus oxychloride of 5

to 400% is reacted with the alcohol by continuous mixing, a diluent being used if necessary, at temperatures between 10 and 50° C, the reaction mixture is cooled, the hydrogen chloride formed is then separated off in a preliminary degassing stage, the reaction mixture, which has essentially been freed from hydrogen chloride, is worked-up in a distillation column, the unreacted phosphorus oxychloride and the diluent, if used, being separated off over the top and condensed, the condensate is recycled into the reaction and the corresponding alkyl ester dichloride is removed continuously as the bottom product.

2. Process according to Claim 1, characterised in that an excess of phosphorus oxychloride of 10 to 50% is used.

3. Process according to Claims 1 and 2, wherein R represents methyl or ethyl.

**Revendications**

1. Procédé de fabrication de dichlorures d'esters alcoylés d'acide phosphorique par réaction de l'oxychlorure de phosphore avec des alcools aliphatiques primaires selon l'équation réactionnelle

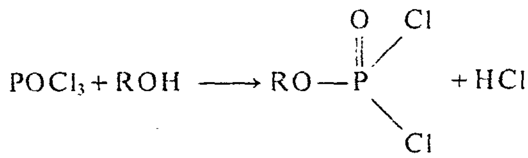

dans laquelle R représente un alcoyle en $C_1-C_5$, caractérisé en ce qu'on fait réagir l'oxychlorure de phosphore en un excès de 5 à 400% par mélange en continu avec l'alcool, éventuellement avec utilisation d'un diluant, à des températures entre 10 et 50° C, en ce qu'on refroidit le mélange de réaction, on sépare ensuite l'acide chlorhydrique formé dans un prédégazage, on traite le mélange de réaction largement débarrassé de l'acide chlorhydrique dans une colonne de distillation avec séparation en tête et condensation de l'oxychlorure de phosphore n'ayant pas réagi et du diluant éventuellement utilisé, on renvoie le condensat à la réaction et l'on prélève comme produit de queue en continu le dichlorure d'ester alcoylé correspondant.

2. Procédé selon la revendication 1, caractérisé en ce qu'on utilise un excès d'oxychlorure de phosphore de 10 à 50%.

3. Procédé selon les revendications 1 et 2, caractérisé en ce que R est un méthyle ou éthyle.

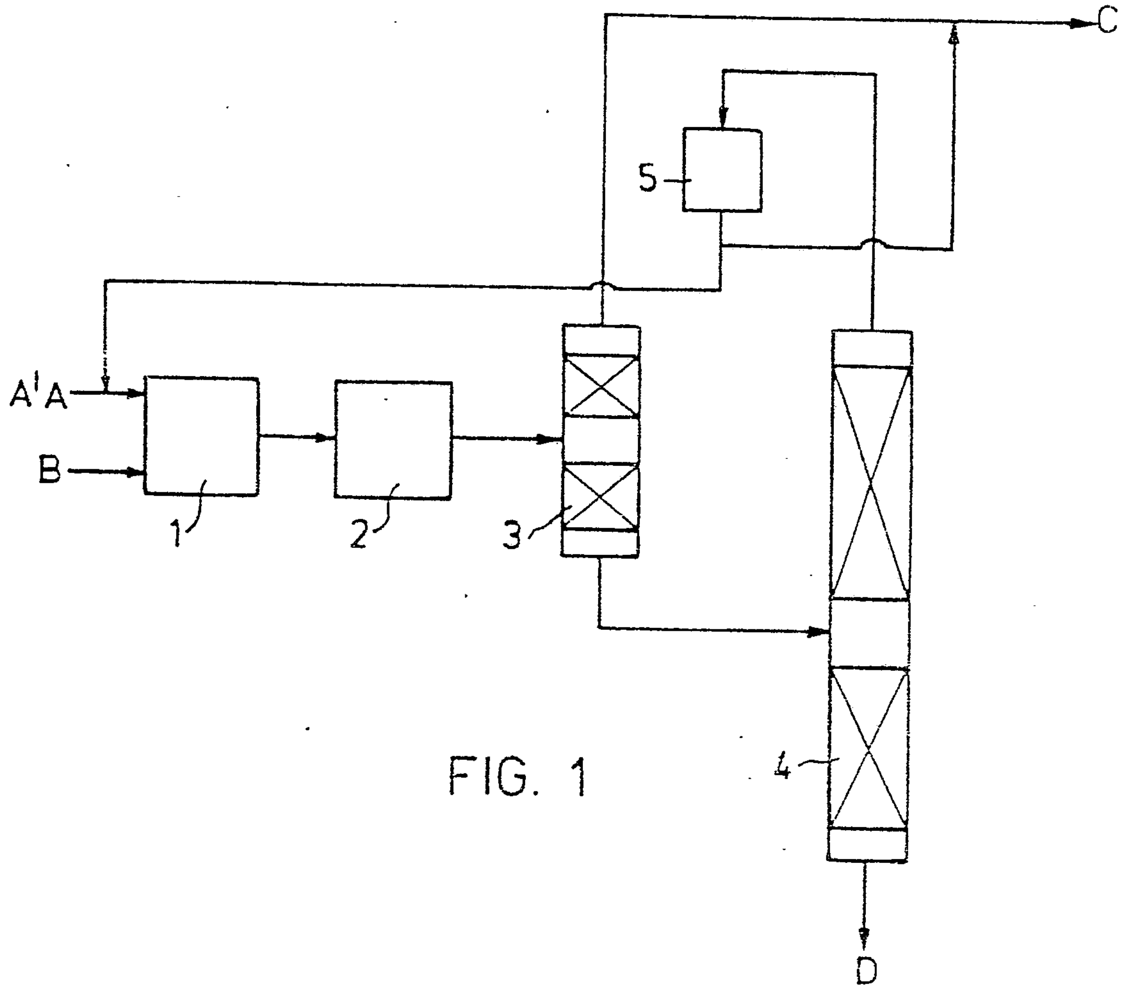


FIG. 1